# EUROPEAN PATENT SPECIFICATION

(11) **EP 3 163 923 B1**
(45) Date of publication and mention of the grant of the patent: **08.07.2020**
(21) Application number: 15765368.4
(22) Date of filing: 16.03.2015
(51) Int. Cl.: H04W 12/04, H04W 36/00, H04W 76/11

(54) **KEY GENERATION METHOD, MASTER ENODEB, SECONDARY ENODEB AND USER EQUIPMENT**
SCHLÜSSELERZEUGUNGSVERFAHREN, MASTER-ENODEB, SEKUNDÄR-ENODEB UND BENUTZERVORRICHTUNG
PROCÉDÉ DE GÉNÉRATION DE CLÉ, ENODEB MAÎTRE, ENODEB SECONDAIRE ET ÉQUIPEMENT D'UTILISATEUR

(30) Priority: 18.03.2014 CN 201410100651
(43) Date of publication of application: 03.05.2017
(73) Proprietor: Huawei Technologies Co., Ltd., Longgang District Shenzhen, Guangdong 518129 (CN)
(72) Inventor: GAN, Lu, Shenzhen Guangdong 518129 (CN); WU, Rong, Shenzhen Guangdong 518129 (CN); HE, Chengdong, Shenzhen Guangdong 518129 (CN)
(74) Representative: Gill Jennings & Every LLP
(86) International application number: PCT/CN2015/074324
(87) International publication number: WO 2015/139596

(56) References cited:
- WO-A1-2013/064041
- CN-A- 102 056 157
- CN-A- 102 487 507
- CN-A- 102 740 289
- CN-A- 102 740 289
- Menezes, Vanstone, Oorschot: "Handbook of Applied Cryptography", 1997, CRC Press LLC, USA, XP1525013, pages 543-590, * page 568 *

## Description

### TECHNICAL FIELD

The present invention relates to the field of communications technologies, and in particular, to a key generation method, a master eNodeB, a secondary eNodeB, and user equipment.

### BACKGROUND

With development of communications technologies, a 4G communications system is widely used. In the 4G communications system, to improve a user plane data throughput of user equipment, the user equipment may connect to both a master eNodeB (MeNB, Master eNB) and a secondary eNodeB (SeNB, Secondary eNB), and the user equipment may simultaneously transmit user plane data to the master eNodeB and the secondary eNodeB. The master eNodeB is a macro base station (Marco eNB/cell), and the secondary eNodeB is a small cell (Small eNB/cell). The small cell is specifically a micro base station (Pico eNB/cell) or a femto base station (Femto eNB/cell).

Considering security of user plane data transmission between the user equipment and the secondary eNodeB, security protection needs to be performed on user plane transmission between the user equipment and the secondary eNodeB. In an existing key generation method, user plane keys of the user equipment and the secondary eNodeB are both generated by the master eNodeB and sent to the user equipment and the secondary eNodeB, which causes extremely heavy load on the master eNodeB. In addition, for same user equipment and a secondary eNodeB, only one user plane key is generated, that is, all user plane keys between the secondary eNodeB and the same user equipment are the same. If one user plane key between the user equipment and the secondary eNodeB is cracked, all the user plane keys between the same user equipment and the secondary eNodeB are cracked.

It may be learned that the existing key generation method causes extremely heavy load on a master eNodeB, and security of a generated user plane key between user equipment and a secondary eNodeB is relatively low.

EP 2 863 668 relates to key updating method, device and system. EP 2 765 795 method and relevant device for generating group key. Handbook of Applied Cryptography, by A. Menezes, P. van Oorschot, and S. Vanstone, CRC Press, 1996 discloses various key management techniques.

### SUMMARY

In view of this, embodiments of the present invention provide a key generation method, a master eNodeB, a secondary eNodeB, and user equipment, so as to reduce load of the master eNodeB and improve security of a user plane key between the user equipment and the secondary eNodeB.

Various aspects of the present disclosure have been defined in the independent claims. Further technical features of each of these aspects have been defined in the respective dependent claims.

According to the foregoing solutions, a user plane key between user equipment and a secondary eNodeB is separately generated by the user equipment and the secondary eNodeB, so that load of a master eNodeB may be effectively reduced. In addition, different user plane keys between same user equipment and the secondary eNodeB are generated for different DRBs, so that security of the user plane keys between the secondary eNodeB and the user equipment may be effectively improved.

### BRIEF DESCRIPTION OF DRAWINGS

FIG. 1 is a schematic flowchart of a key generation method according to Embodiment 1 of the present invention;
FIG. 2 is a signaling diagram of the key generation method according to Embodiment 1 of the present invention;
FIG. 3 is a schematic flowchart of a key generation method according to Embodiment 2 of the present invention;
FIG. 4 is a signaling diagram of the key generation method according to Embodiment 2 of the present invention;
FIG. 5 is a schematic flowchart of a key generation method according to Embodiment 3 of the present invention;
FIG. 6 is a signaling diagram of the key generation method according to Embodiment 3 of the present invention;
FIG. 7 is a schematic structural diagram of a secondary eNodeB according to Embodiment 4 of the present invention;
FIG. 8 is a schematic structural diagram of a secondary eNodeB according to Embodiment 5 of the present invention;
FIG. 9 is a schematic structural diagram of a master eNodeB according to Embodiment 6 of the present invention;
FIG. 10 is a schematic structural diagram of a master eNodeB according to Embodiment 7 of the present invention;
FIG. 11 is a schematic structural diagram of a master eNodeB according to Embodiment 8 of the present invention;
FIG. 12 is a schematic structural diagram of a master eNodeB according to Embodiment 9 of the present invention;
FIG. 13 is a schematic structural diagram of user equipment according to Embodiment 10 of the present invention; and
FIG. 14 is a schematic structural diagram of user equipment according to Embodiment 11 of the present invention.

The following further describes in detail the technical solutions of the embodiments of the present invention with reference to the accompanying drawings and embodiments.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

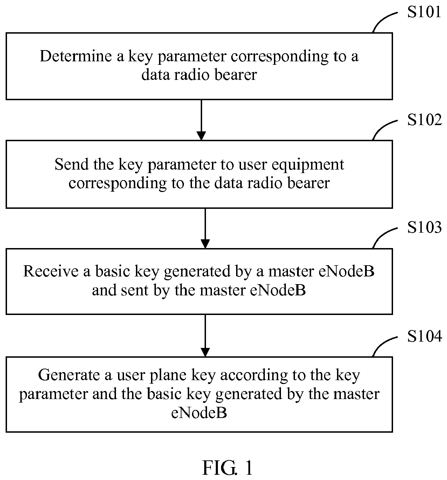

The following uses FIG. 1 as an example to describe in detail a key generation method provided in Embodiment 1 of the present invention. FIG. 1 is a schematic flowchart of a key generation method according to Embodiment 1 of the present invention. An execution body of the key generation method is a secondary eNodeB. The secondary eNodeB is a small cell, and the small cell is specifically a micro base station or a femto base station.

As shown in FIG. 1, the key generation method includes the following steps:

Step S101: Determine a key parameter corresponding to a data radio bearer (Data Radio Bearer, DRB).

The key parameter may be allocated by the secondary eNodeB or a master eNodeB. The master eNodeB is a macro base station.

Optionally, if the key parameter is allocated by the secondary eNodeB, the key parameter includes at least one of the following parameters: a DRB ID, a random number, or a counter value.

Specifically, after user equipment establishes a radio resource control protocol (Radio Resource Control, RRC) connection to the master eNodeB, the secondary eNodeB receives a DRB establishing or adding request sent by the master eNodeB. After receiving the DRB establishing or adding request, the secondary eNodeB allocates a DRB to the user equipment and allocates a DRB ID to the DRB. A DRB ID of each DRB is unique, and therefore the DRB ID may be used as a key parameter corresponding to the DRB.

The secondary eNodeB may include a random number generator. After the user equipment establishes the RRC connection to the master eNodeB, the secondary eNodeB receives a DRB establishing or adding request sent by the master eNodeB. After receiving the DRB establishing or adding request, the secondary eNodeB allocates a DRB to the user equipment, and then the random number generator generates a random number for the DRB. Each random number generated by the random number generator is unique, and therefore the random number may be used as a key parameter corresponding to the DRB.

The secondary eNodeB may further include a counter. After the user equipment establishes the RRC connection to the master eNodeB, the secondary eNodeB receives a DRB establishing or adding request sent by the master eNodeB. After receiving the DRB establishing or adding request, the secondary eNodeB allocates a DRB to the user equipment, and then the counter generates a counter value for the DRB. Each counter value generated by the counter is unique, and therefore the counter value may be used as a key parameter corresponding to the DRB.

Optionally, if the key parameter is allocated by the master eNodeB, before step S101, the following step is further included:
receiving a DRB establishing or adding request sent by the master eNodeB, where the DRB establishing or adding request carries the key parameter.

The key parameter includes only a DRB ID.

Specifically, after user equipment establishes an RRC connection to the master eNodeB, the master eNodeB allocates a DRB to the user equipment. A DRB ID of each DRB is unique, and therefore the DRB ID may be used as a key parameter corresponding to the DRB.

Accordingly, step S101 is specifically: obtaining the key parameter from the received DRB establishing or adding request.

Step S102: Send the key parameter to user equipment corresponding to the DRB.

Optionally, the secondary eNodeB may first send the key parameter to the master eNodeB, and then the master eNodeB forwards the key parameter to the user equipment.

After receiving the key parameter sent by the master eNodeB, the user equipment performs, by using a key derivation function (key derivation function, KDF), calculation on the key parameter and a basic key (for example, a secondary eNodeB key S-KeNB) generated by the user equipment, so as to generate a user plane key.

Step S103: Receive a basic key generated by a master eNodeB and sent by the master eNodeB.

The basic key generated by the user equipment and the basic key generated by the master eNodeB are the same.

Specifically, the user equipment and the master eNodeB separately perform calculation on a same shared key (for example, a base station key KeNB) and a same shared key parameter by using the key derivation function KDF, so as to generate a basic key. Therefore, the basic key generated by the user equipment and the basic key generated by the master eNodeB are the same.

Step S104: Generate a user plane key according to the key parameter and the basic key generated by the master eNodeB.

The secondary eNodeB generates, in a same manner in which the user equipment generates a user plane key, the user plane key according to the key parameter and the basic key generated by the master eNodeB. Because the basic key generated by the user equipment and the basic key generated by the master eNodeB are the same, and a same user plane key generation manner is used, the user plane key generated by the user equipment and the user plane key generated by the secondary eNodeB are the same.

The user plane key generated in this embodiment is specifically a user plane cipher key. Before sending user plane data, the user equipment or the secondary eNodeB encrypts, according to the generated user plane cipher key, the user plane data to form a ciphertext, so that the data cannot be cracked in a sending process. Correspondingly, after receiving the user plane data, the user equipment or the secondary eNodeB decrypts the user plane data according to the generated user plane cipher key to obtain original user plane data.

Alternatively, the user plane key generated in this embodiment may be specifically a user plane integrity protection key. Before sending user plane data, the user equipment or the secondary eNodeB performs integrity protection on the user plane data according to the generated user plane integrity protection key, so that the data cannot be tampered in a sending process. Correspondingly, after receiving the user plane data, the user equipment or the secondary eNodeB checks integrity of the user plane data according to the generated user plane integrity protection key, so as to ensure that the user plane data is not tampered.

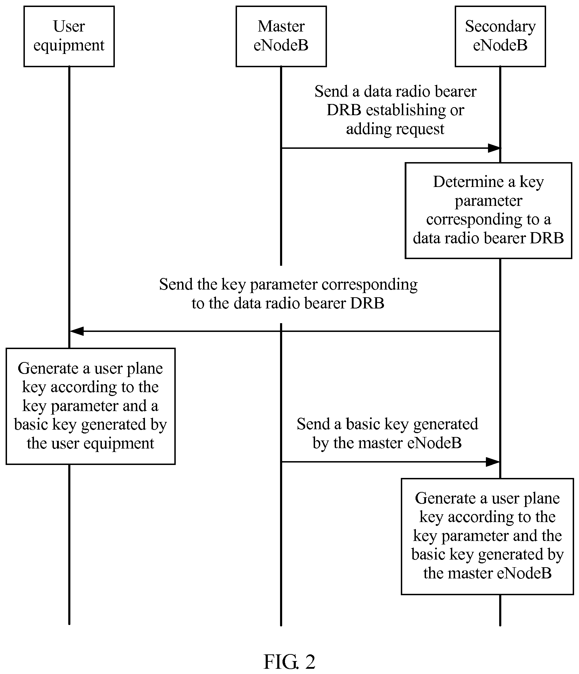

Further, FIG. 2 is a signaling diagram of the key generation method according to Embodiment 1 of the present invention. The signaling diagram shown in FIG. 2 shows in detail a procedure of interaction among user equipment, a master eNodeB, and a secondary eNodeB. The secondary eNodeB in FIG. 2 is the execution body of the key generation method provided in Embodiment 1. Key generation methods in FIG. 2 may all be executed according to a process described in the foregoing Embodiment 1, and are not repeated herein.

According to the used key generation method provided in Embodiment 1 of the present invention, a user plane key between user equipment and a secondary eNodeB is separately generated by the user equipment and the secondary eNodeB, so that load of a master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

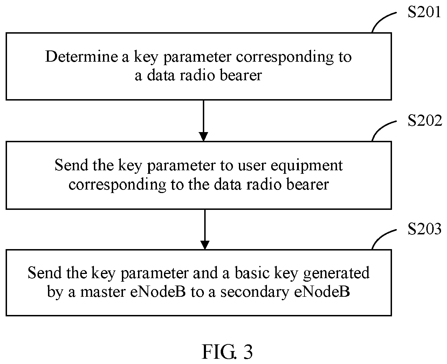

The following uses FIG. 3 as an example to describe in detail a key generation method provided in Embodiment 2 of the present invention. FIG. 3 is a schematic flowchart of a key generation method according to Embodiment 2 of the present invention. An execution body of the key generation method is a master eNodeB. The master eNodeB is a macro base station.

As shown in FIG. 3, the key generation method includes the following steps:
Step S201: Determine a key parameter corresponding to a DRB.

The key parameter includes a DRB ID.

Specifically, after user equipment establishes an RRC connection to the master eNodeB, the master eNodeB allocates a DRB to the user equipment and allocates a DRB ID to the DRB. A DRB ID of each DRB is unique, and therefore the DRB ID may be used as a key parameter corresponding to the DRB.

Step S202: Send the key parameter to user equipment corresponding to the DRB.

After receiving the key parameter sent by a master eNodeB, the user equipment performs, by using a key derivation function KDF, calculation on the key parameter and a basic key (for example, a secondary eNodeB key S-KeNB) generated by the user equipment, so as to generate a user plane key.

The secondary eNodeB is a small cell, and the small cell is specifically a micro base station or a femto base station.

Step S203: Send the key parameter and a basic key generated by the master eNodeB to a secondary eNodeB.

The basic key generated by the user equipment and the basic key generated by the master eNodeB are the same.

Specifically, the user equipment and the master eNodeB separately perform calculation on a same shared key (for example, a base station key KeNB) and a same shared key parameter by using the key derivation function KDF, so as to generate a basic key. Therefore, the basic key generated by the user equipment and the basic key generated by the master eNodeB are the same.

The secondary eNodeB generates, in a same manner in which the user equipment generates a user plane key, a user plane key according to the key parameter and the basic key generated by the master eNodeB. Because the basic key generated by the user equipment and the basic key generated by the master eNodeB are the same, and a same user plane key generation manner is used, the user plane key generated by the user equipment and the user plane key generated by the secondary eNodeB are the same.

Optionally, the user plane key generated in this embodiment may be specifically a user plane cipher key. Before sending user plane data, the user equipment or the secondary eNodeB encrypts, according to the generated user plane cipher key, the user plane data to form a ciphertext, so that the data cannot be cracked in a sending process. Correspondingly, after receiving the user plane data, the user equipment or the secondary eNodeB decrypts the user plane data according to the generated user plane cipher key to obtain original user plane data.

Optionally, the user plane key generated in this embodiment may be specifically a user plane integrity protection key. Before sending user plane data, the user equipment or the secondary eNodeB performs integrity protection on the user plane data according to the generated user plane integrity protection key, so that the data cannot be tampered in a sending process. Correspondingly, after receiving the user plane data, the user equipment or the secondary eNodeB checks integrity of the user plane data according to the generated user plane integrity protection key, so as to ensure that the user plane data is not tampered.

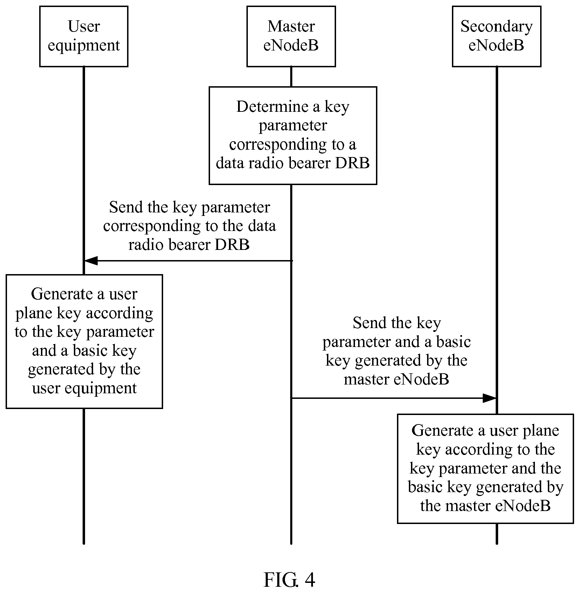

Further, FIG. 4 is a signaling diagram of the key generation method according to Embodiment 2 of the present invention. The signaling diagram shown in FIG. 4 shows in detail a procedure of interaction among user equipment, a master eNodeB, and a secondary eNodeB. The master eNodeB in FIG. 4 is the execution body of the key generation method provided in Embodiment 2. Key generation methods in FIG. 4 may all be executed according to a process described in the foregoing Embodiment 2, and are not repeated herein.

According to the used key generation method provided in Embodiment 2 of the present invention, a user plane key between user equipment and a secondary eNodeB is separately generated by the user equipment and the secondary eNodeB, so that load of a master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

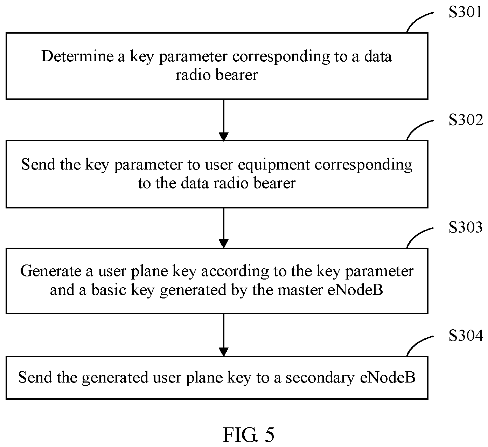

The following uses FIG. 5 as an example to describe in detail a key generation method provided in Embodiment 3 of the present invention. FIG. 5 is a schematic flowchart of a key generation method according to Embodiment 3 of the present invention. An execution body of the key generation method is a master eNodeB. The master eNodeB is a macro base station.

As shown in FIG. 3, the key generation method includes the following steps:
Step S301: Determine a key parameter corresponding to a DRB.

The key parameter includes a DRB ID.

Specifically, after user equipment establishes an RRC connection to the master eNodeB, the master eNodeB allocates a DRB to the user equipment and allocates a DRB ID to the DRB. A DRB ID of each DRB is unique, and therefore the DRB ID may be used as a key parameter corresponding to the DRB.

Step S302: Send the key parameter to user equipment corresponding to the DRB.

After receiving the key parameter sent by a master eNodeB, the user equipment performs, by using a key derivation function KDF, calculation on the key parameter and a basic key (for example, a secondary eNodeB key S-KeNB) generated by the user equipment, so as to generate a user plane key.

The secondary eNodeB is a small cell, and the small cell is specifically a micro base station or a femto base station.

Step S303: Generate a user plane key according to the key parameter and a basic key generated by the master eNodeB.

The basic key generated by the user equipment and the basic key generated by the master eNodeB are the same.

Specifically, the user equipment and the master eNodeB separately perform calculation on a same shared key (for example, a base station key KeNB) and a same shared key parameter by using the key derivation function KDF, so as to generate a basic key. Therefore, the basic key generated by the user equipment and the basic key generated by the master eNodeB are the same. The master eNodeB generates, in a same manner in which the user equipment generates a user plane key, the user plane key according to the key parameter and the basic key generated by the master eNodeB. Because the basic key generated by the user equipment and the basic key generated by the master eNodeB are the same, and a same user plane key generation manner is used, the user plane key generated by the user equipment and the user plane key generated by the master eNodeB are the same.

Step S304: Send the generated user plane key to a secondary eNodeB.

The secondary eNodeB uses the user plane key sent by the master eNodeB as a user plane key between the user equipment and the secondary eNodeB.

Optionally, the user plane key generated in this embodiment may be specifically a user plane cipher key. Before sending user plane data, the user equipment or the secondary eNodeB encrypts, according to the generated user plane cipher key, the user plane data to form a ciphertext, so that the data cannot be cracked in a sending process. Correspondingly, after receiving the user plane data, the user equipment or the secondary eNodeB decrypts the user plane data according to the generated user plane cipher key to obtain original user plane data.

Optionally, the user plane key generated in this embodiment may be specifically a user plane integrity protection key. Before sending user plane data, the user equipment or the secondary eNodeB performs integrity protection on the user plane data according to the generated user plane integrity protection key, so that the data cannot be tampered in a sending process. Correspondingly, after receiving the user plane data, the user equipment or the secondary eNodeB checks integrity of the user plane data according to the generated user plane integrity protection key, so as to ensure that the user plane data is not tampered.

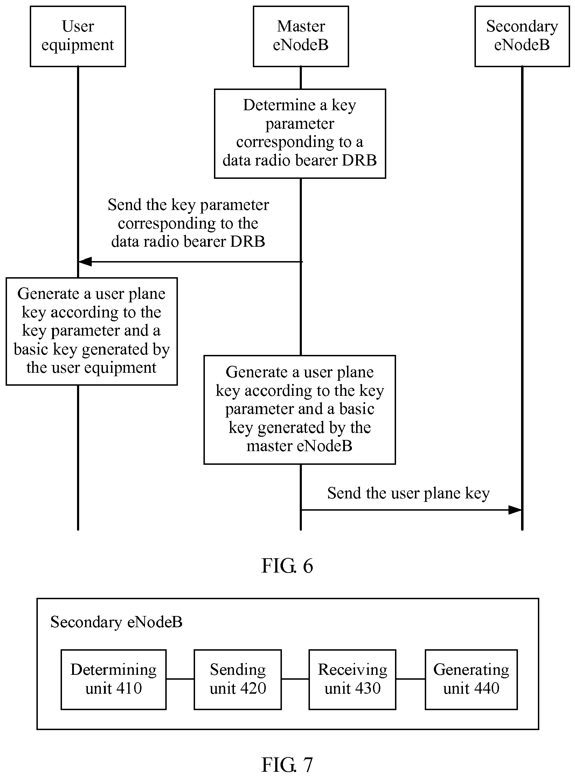

Further, FIG. 6 is a signaling diagram of the key generation method according to Embodiment 3 of the present invention. The signaling diagram shown in FIG. 6 shows in detail a procedure of interaction among user equipment, a master eNodeB, and a secondary eNodeB. The master eNodeB in FIG. 6 is the execution body of the key generation method provided in Embodiment 3. Key generation methods in FIG. 6 may all be executed according to a process described in the foregoing Embodiment 3, and are not repeated herein.

According to the used key generation method provided in Embodiment 3 of the present invention, a user plane key between user equipment and a secondary eNodeB is separately generated by the user equipment and a master eNodeB, so that load of the master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

The following uses FIG. 7 as an example to describe in detail a secondary eNodeB provided in Embodiment 4 of the present invention. FIG. 7 is a schematic structural diagram of a secondary eNodeB according to Embodiment 4 of the present invention. The secondary eNodeB is a small cell, and the small cell is specifically a micro base station or a femto base station configured to implement the key generation method provided in Embodiment 1 of the present invention.

As shown in FIG. 7, the secondary eNodeB includes: a determining unit 410, a sending unit 420, a receiving unit 430, and a generating unit 440.

The determining unit 410 is configured to determine a key parameter corresponding to a DRB.

The key parameter may be allocated by the secondary eNodeB or a master eNodeB. The master eNodeB is a macro base station.

Optionally, if the key parameter is allocated by the secondary eNodeB, the key parameter includes at least one of the following parameters: a DRB ID, a random number, or a counter value.

Specifically, after user equipment establishes an RRC connection to the master eNodeB, the secondary eNodeB receives a DRB establishing or adding request sent by the master eNodeB. After receiving the DRB establishing or adding request, the secondary eNodeB allocates a DRB to the user equipment, and the determining unit 410 allocates a DRB ID to the DRB. A DRB ID of each DRB is unique, and therefore the determining unit 410 uses the DRB ID as a key parameter corresponding to the DRB.

The determining unit 410 may include a random number generator. After the user equipment establishes the RRC connection to the master eNodeB, the secondary eNodeB receives a DRB establishing or adding request sent by the master eNodeB. After receiving the DRB establishing or adding request, the secondary eNodeB allocates a DRB to the user equipment, and then the random number generator generates a random number for the DRB. Each random number generated by the random number generator is unique, and therefore the determining unit 410 may use the random number as a key parameter corresponding to the DRB.

The determining unit 410 may further include a counter. After the user equipment establishes the RRC connection to the master eNodeB, the secondary eNodeB receives a DRB establishing or adding request sent by the master eNodeB. After receiving the DRB establishing or adding request, the secondary eNodeB allocates a DRB to the user equipment, and then the counter generates a counter value for the DRB. Each counter value generated by the counter is unique, and therefore the determining unit 410 may use the counter value as a key parameter corresponding to the DRB.

Optionally, if the key parameter is allocated by the master eNodeB, the receiving unit 430 is configured to receive a DRB establishing or adding request sent by the master eNodeB, where the DRB establishing or adding request carries the key parameter.

The key parameter includes only a DRB ID.

Specifically, after user equipment establishes an RRC connection to the master eNodeB, the master eNodeB allocates a DRB to the user equipment and allocates a DRB ID to the DRB. A DRB ID of each DRB is unique, and therefore the DRB ID may be used as a key parameter corresponding to the DRB.

Accordingly, the determining unit 410 is specifically configured to obtain the key parameter from the received DRB establishing or adding request.

The sending unit 420 is configured to send the key parameter to user equipment corresponding to the DRB.

Optionally, the sending unit 420 may first send the key parameter to the master eNodeB, and then the master eNodeB forwards the key parameter to the user equipment.

After receiving the key parameter sent by the master eNodeB, the user equipment performs, by using a key derivation function KDF, calculation on the key parameter and a basic key (for example, a secondary eNodeB key S-KeNB) generated by the user equipment, so as to generate a user plane key.

The receiving unit 430 is configured to receive a basic key generated by the master eNodeB and sent by the master eNodeB.

The basic key generated by the user equipment and the basic key generated by the master eNodeB are the same.

Specifically, the user equipment and the master eNodeB separately perform calculation on a same shared key (for example, a base station key KeNB) and a same shared key parameter by using the key derivation function KDF, so as to generate a basic key. Therefore, the basic key generated by the user equipment and the basic key generated by the master eNodeB are the same.

The generating unit 440 is configured to generate a user plane key according to the key parameter and the basic key generated by the master eNodeB.

The generating unit 440 generates, in a same manner in which the user equipment generates a user plane key, the user plane key according to the key parameter and the basic key generated by the master eNodeB. Because the basic key generated by the user equipment and the basic key generated by the master eNodeB are the same, and a same user plane key generation manner is used, the user plane key generated by the user equipment and the user plane key generated by the generating unit 440 are the same.

Optionally, the user plane key generated in this embodiment may be specifically a user plane cipher key. Before sending user plane data, the user equipment or the secondary eNodeB encrypts, according to the generated user plane cipher key, the user plane data to form a ciphertext, so that the data cannot be cracked in a sending process. Correspondingly, after receiving the user plane data, the user equipment or the secondary eNodeB decrypts the user plane data according to the generated user plane cipher key to obtain original user plane data.

Optionally, the user plane key generated in this embodiment may be specifically a user plane integrity protection key. Before sending user plane data, the user equipment or the secondary eNodeB performs integrity protection on the user plane data according to the generated user plane integrity protection key, so that the data cannot be tampered in a sending process. Correspondingly, after receiving the user plane data, the user equipment or the secondary eNodeB checks integrity of the user plane data according to the generated user plane integrity protection key, so as to ensure that the user plane data is not tampered.

According to the used secondary eNodeB provided in Embodiment 4 of the present invention, a user plane key between user equipment and the secondary eNodeB is separately generated by the user equipment and the secondary eNodeB, so that load of a master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

In hardware implementation, the foregoing sending unit 420 may be a transmitter or a transceiver, the foregoing receiving unit 430 may be a receiver or a transceiver, and the sending unit 420 and the receiving unit 430 may be integrated to constitute a transceiver unit, which is a transceiver corresponding to the hardware implementation. The foregoing determining unit 410 and the generating unit 440 may be built in or independent of a processor of the secondary eNodeB in a hardware form, or may be stored in a memory of the secondary eNodeB in a software form, so that the processor invokes and executes an operation corresponding to each of the foregoing modules. The processor may be a central processing unit (CPU), a microprocessor, a single-chip microcomputer, or the like.

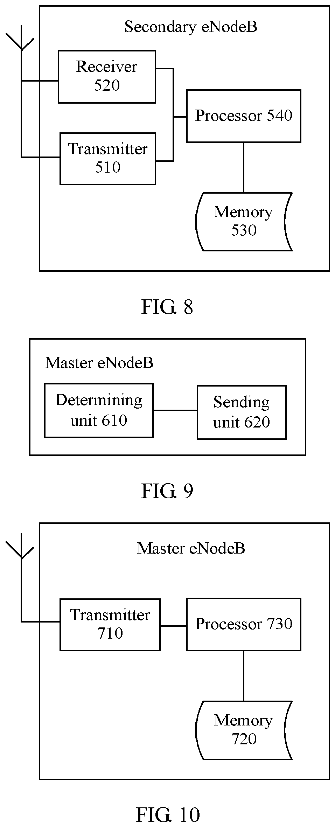

As shown in FIG. 8, FIG. 8 is a schematic structural diagram of a secondary eNodeB according to Embodiment 5 of the present invention. The secondary eNodeB includes a transmitter 510, a receiver 520, a memory 530, and a processor 540 separately connected to the transmitter 510, the receiver 520, and the memory 530. Certainly, the secondary eNodeB may further include general components, such as an antenna, a baseband processing component, an intermediate radio frequency processing component, and an input and output apparatus. This embodiment of the present invention sets no limitation thereto. The secondary eNodeB is a small cell, and the small cell is specifically a micro base station or a femto base station configured to implement the key generation method provided in Embodiment 1 of the present invention.

The memory 530 stores a set of program code, and the processor 540 is configured to invoke the program code stored in the memory 530, so as to execute the following operations:
determining a key parameter corresponding to a DRB;
sending the key parameter to user equipment corresponding to the DRB, so that the user equipment generates a user plane key according to the key parameter and a basic key generated by the user equipment;
receiving a basic key generated by a master eNodeB and sent by the master eNodeB; and
generating the user plane key according to the key parameter and the basic key generated by the master eNodeB; where
the basic key generated by the user equipment and the basic key generated by the master eNodeB are the same.

Further, the determining a key parameter corresponding to a DRB is specifically:
allocating or generating a key parameter for the DRB, where the key parameter includes at least one of the following parameters: a DRB ID, a random number, or a counter value.

Further, the processor 540 is configured to invoke the program code stored in the memory 530, so as to further execute the following operations:
before the determining a key parameter corresponding to a DRB, receiving a DRB establishing or adding request sent by the master eNodeB, where the DRB establishing or adding request carries the key parameter; and the determining a key parameter corresponding to a DRB is specifically: obtaining the key parameter from the DRB establishing or adding request, where the key parameter includes a DRB ID.

Further, the sending the key parameter to user equipment corresponding to the DRB is specifically:
sending the key parameter to the user equipment by using the master eNodeB.

Further, the user plane key is a user plane cipher key or a user plane integrity protection key.

The master eNodeB is a macro base station.

According to the used secondary eNodeB provided in Embodiment 5 of the present invention, a user plane key between user equipment and the secondary eNodeB is separately generated by the user equipment and the secondary eNodeB, so that load of a master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

The following uses FIG. 9 as an example to describe in detail a master eNodeB provided in Embodiment 6 of the present invention. FIG. 9 is a schematic structural diagram of a master eNodeB according to Embodiment 6 of the present invention. The master eNodeB is a macro base station configured to implement the key generation method provided in Embodiment 2 of the present invention.

As shown in FIG. 9, the master eNodeB includes: a determining unit 610 and a sending unit 620.

The determining unit 610 is configured to determine a key parameter corresponding to a DRB.

The key parameter includes a DRB ID.

Specifically, after user equipment establishes an RRC connection to the master eNodeB, the master eNodeB allocates a DRB to the user equipment, and the determining unit 610 allocates a DRB ID to the DRB. A DRB ID of each DRB is unique, and therefore the determining unit 610 uses the DRB ID as a key parameter corresponding to the DRB.

The sending unit 620 is configured to send the key parameter to user equipment corresponding to the DRB.

After receiving the key parameter sent by a master eNodeB, the user equipment performs, by using a key derivation function KDF, calculation on the key parameter and a basic key (for example, a secondary eNodeB key S-KeNB) generated by the user equipment, so as to generate a user plane key.

The secondary eNodeB is a small cell, and the small cell is specifically a micro base station or a femto base station.

The sending unit 620 is further configured to send the key parameter and a basic key generated by the master eNodeB to the secondary eNodeB.

The basic key generated by the user equipment and the basic key generated by the master eNodeB are the same.

Specifically, the user equipment and the master eNodeB separately perform calculation on a same shared key (for example, a base station key KeNB) and a same shared key parameter by using the key derivation function KDF, so as to generate a basic key. Therefore, the basic key generated by the user equipment and the basic key generated by the master eNodeB are the same.

The secondary eNodeB generates, in a same manner in which the user equipment generates a user plane key, a user plane key according to the key parameter and the basic key generated by the master eNodeB. Because the basic key generated by the user equipment and the basic key generated by the master eNodeB are the same, and a same user plane key generation manner is used, the user plane key generated by the user equipment and the user plane key generated by the secondary eNodeB are the same.

Optionally, the user plane key generated in this embodiment may be specifically a user plane cipher key. Before sending user plane data, the user equipment or the secondary eNodeB encrypts, according to the generated user plane cipher key, the user plane data to form a ciphertext, so that the data cannot be cracked in a sending process. Correspondingly, after receiving the user plane data, the user equipment or the secondary eNodeB decrypts the user plane data according to the generated user plane cipher key to obtain original user plane data.

Optionally, the user plane key generated in this embodiment may be specifically a user plane integrity protection key. Before sending user plane data, the user equipment or the secondary eNodeB performs integrity protection on the user plane data according to the generated user plane integrity protection key, so that the data cannot be tampered in a sending process. Correspondingly, after receiving the user plane data, the user equipment or the secondary eNodeB checks integrity of the user plane data according to the generated user plane integrity protection key, so as to ensure that the user plane data is not tampered.

According to the used master eNodeB provided in Embodiment 6 of the present invention, a user plane key between user equipment and a secondary eNodeB is separately generated by the user equipment and the secondary eNodeB, so that load of the master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

In hardware implementation, the foregoing sending unit 620 may be a transmitter or a transceiver, and the foregoing determining unit 610 may be built in or independent of a processor of the master eNodeB in a hardware form, or may be stored in a memory of the master eNodeB in a software form, so that the processor invokes and executes an operation corresponding to each of the foregoing modules. The processor may be a central processing unit (CPU), a microprocessor, a single-chip microcomputer, or the like.

As shown in FIG. 10, FIG. 10 is a schematic structural diagram of a master eNodeB according to Embodiment 7 of the present invention. The master eNodeB includes a transmitter 710, a memory 720, and a processor 730 separately connected to the transmitter 710 and the memory 720. Certainly, the master eNodeB may further include general components, such as an antenna, a baseband processing component, an intermediate radio frequency processing component, and an input and output apparatus. This embodiment of the present invention sets no limitation thereto. The master eNodeB is a macro base station configured to implement the key generation method provided in Embodiment 2 of the present invention.

The memory 720 stores a set of program code, and the processor 730 is configured to invoke the program code stored in the memory 720, so as to execute the following operations:
determining a key parameter corresponding to a DRB;
sending the key parameter to user equipment corresponding to the DRB, so that the user equipment generates a user plane key according to the key parameter and a basic key generated by the user equipment; and
sending the key parameter and a basic key generated by the master eNodeB to a secondary eNodeB, so that the secondary eNodeB generates the user plane key according to the key parameter and the basic key generated by the master eNodeB; where
the basic key generated by the user equipment and the basic key generated by the master eNodeB are the same.

Further, the key parameter includes a DRB ID.

Further, the user plane key is a user plane cipher key or a user plane integrity protection key.

The secondary eNodeB is a small cell, and the small cell is specifically a micro base station or a femto base station.

According to the used master eNodeB provided in Embodiment 7 of the present invention, a user plane key between user equipment and a secondary eNodeB is separately generated by the user equipment and the secondary eNodeB, so that load of the master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

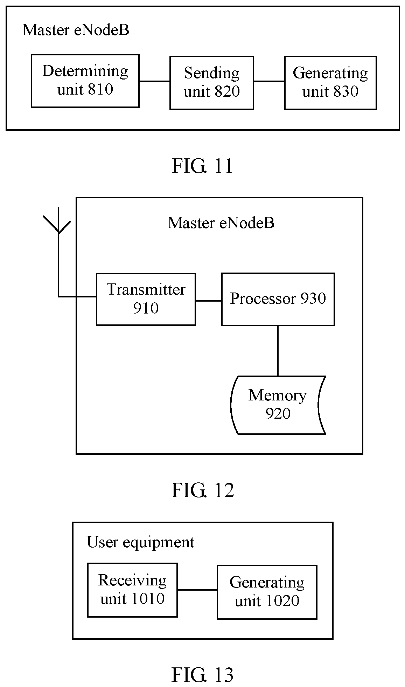

The following uses FIG. 11 as an example to describe in detail a master eNodeB provided in Embodiment 8 of the present invention. FIG. 11 is a schematic structural diagram of a master eNodeB according to Embodiment 8 of the present invention. The master eNodeB is a macro base station configured to implement the key generation method provided in Embodiment 3 of the present invention.

As shown in FIG. 11, the master eNodeB includes: a determining unit 810, a sending unit 820, and a generating unit 830.

The determining unit 810 is configured to determine a key parameter corresponding to a DRB.

The key parameter includes a DRB ID.

Specifically, after user equipment establishes an RRC connection to the master eNodeB, the master eNodeB allocates a DRB to the user equipment, and the determining unit 810 allocates a DRB ID to the DRB. A DRB ID of each DRB is unique, and therefore the determining unit 810 uses the DRB ID as a key parameter corresponding to the DRB.

The sending unit 820 is configured to send the key parameter to user equipment corresponding to the DRB.

After receiving the key parameter sent by a master eNodeB, the user equipment performs, by using a key derivation function KDF, calculation on the key parameter and a basic key (for example, a secondary eNodeB key S-KeNB) generated by the user equipment, so as to generate a user plane key.

The secondary eNodeB is a small cell, and the small cell is specifically a micro base station or a femto base station.

The generating unit 830 is configured to generate a user plane key according to the key parameter and a basic key generated by the master eNodeB.

The basic key generated by the user equipment and the basic key generated by the master eNodeB are the same.

Specifically, the user equipment and the master eNodeB separately perform calculation on a same shared key (for example, a base station key KeNB) and a same shared key parameter by using the key derivation function KDF, so as to generate a basic key. Therefore, the basic key generated by the user equipment and the basic key generated by the master eNodeB are the same.

The generating unit 830 generates, in a same manner in which the user equipment generates a user plane key, the user plane key according to the key parameter and the basic key generated by the master eNodeB. Because the basic key generated by the user equipment and the basic key generated by the master eNodeB are the same, and a same user plane key generation manner is used, the user plane key generated by the user equipment and the user plane key generated by the generating unit 830 are the same.

The sending unit 820 is further configured to send the generated user plane key to the secondary eNodeB.

The secondary eNodeB uses the user plane key sent by the master eNodeB as a user plane key between the user equipment and the secondary eNodeB.

Optionally, the user plane key generated in this embodiment may be specifically a user plane cipher key. Before sending user plane data, the user equipment or the secondary eNodeB encrypts, according to the generated user plane cipher key, the user plane data to form a ciphertext, so that the data cannot be cracked in a sending process. Correspondingly, after receiving the user plane data, the user equipment or the secondary eNodeB decrypts the user plane data according to the generated user plane cipher key to obtain original user plane data.

Optionally, the user plane key generated in this embodiment may be specifically a user plane integrity protection key. Before sending user plane data, the user equipment or the secondary eNodeB performs integrity protection on the user plane data according to the generated user plane integrity protection key, so that the data cannot be tampered in a sending process. Correspondingly, after receiving the user plane data, the user equipment or the secondary eNodeB checks integrity of the user plane data according to the generated user plane integrity protection key, so as to ensure that the user plane data is not tampered.

According to the used master eNodeB provided in Embodiment 8 of the present invention, a user plane key between user equipment and a secondary eNodeB is separately generated by the user equipment and the master eNodeB, so that load of the master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

In hardware implementation, the foregoing sending unit 820 may be a transmitter or a transceiver, and the foregoing determining unit 810 and the generating unit 830 may be built in or independent of a processor of the master eNodeB in a hardware form, or may be stored in a memory of the master eNodeB in a software form, so that the processor invokes and executes an operation corresponding to each of the foregoing modules. The processor may be a central processing unit (CPU), a microprocessor, a single-chip microcomputer, or the like.

As shown in FIG. 12, FIG. 12 is a schematic structural diagram of a master eNodeB according to Embodiment 9 of the present invention. The master eNodeB includes a transmitter 910, a memory 920, and a processor 930 separately connected to the transmitter 910 and the memory 920. Certainly, the master eNodeB may further include general components, such as an antenna, a baseband processing component, an intermediate radio frequency processing component, and an input and output apparatus. This embodiment of the present invention sets no limitation thereto. The master eNodeB is a macro base station configured to implement the key generation method provided in Embodiment 2 of the present invention.

The memory 920 stores a set of program code, and the processor 930 is configured to invoke the program code stored in the memory 920, so as to execute the following operations:
determining a key parameter corresponding to a DRB;
sending the key parameter to user equipment corresponding to the DRB, so that the user equipment generates a user plane key according to the key parameter and a basic key generated by the user equipment;
generating the user plane key according to the key parameter and a basic key generated by the master eNodeB; and
sending the user plane key to a secondary eNodeB; where
the basic key generated by the user equipment and the basic key generated by the master eNodeB are the same.

Further, the key parameter includes a DRB ID.

Further, the user plane key is a user plane cipher key or a user plane integrity protection key.

The secondary eNodeB is a small cell, and the small cell is specifically a micro base station or a femto base station.

According to the used master eNodeB provided in Embodiment 9 of the present invention, a user plane key between user equipment and a secondary eNodeB is separately generated by the user equipment and the master eNodeB, so that load of the master eNodeB may be effectively reduced. In addition, because key parameters of different user equipment are different, user plane keys between the secondary eNodeB and the different user equipment are different; because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

The following uses FIG. 13 as an example to describe in detail user equipment provided in Embodiment 10 of the present invention. FIG. 13 is a schematic structural diagram of user equipment according to Embodiment 10 of the present invention. The user equipment may be user equipment described in Embodiment 1, Embodiment 2, or Embodiment 3.

As shown in FIG. 13, the user equipment includes: a receiving unit 1010 and a generating unit 1020.

The receiving unit 1010 is configured to receive a key parameter corresponding to a DRB sent by a master eNodeB or a secondary eNodeB.

The master eNodeB is a macro base station. The secondary eNodeB is a small cell, and the small cell is specifically a micro base station or a femto base station.

Specifically, the key parameter may be allocated by the secondary eNodeB or the master eNodeB.

Optionally, if the key parameter is allocated by the secondary eNodeB, the key parameter includes at least one of the following parameters: a DRB ID, a random number, or a counter value.

Specifically, after the user equipment establishes an RRC connection to the master eNodeB, the secondary eNodeB receives a DRB establishing or adding request sent by the master eNodeB. After receiving the DRB establishing or adding request, the secondary eNodeB allocates a DRB to the user equipment and allocates a DRB ID to the DRB. A DRB ID of each DRB is unique, and therefore the DRB ID may be used as a key parameter corresponding to the DRB.

The secondary eNodeB may include a random number generator. After the user equipment establishes the RRC connection to the master eNodeB, the secondary eNodeB receives a DRB establishing or adding request sent by the master eNodeB. After receiving the DRB establishing or adding request, the secondary eNodeB allocates a DRB to the user equipment, and then the random number generator generates a random number for the DRB. Each random number generated by the random number generator is unique, and therefore the random number may be used as a key parameter corresponding to the DRB.

The secondary eNodeB may further include a counter. After the user equipment establishes the RRC connection to the master eNodeB, the secondary eNodeB receives a DRB establishing or adding request sent by the master eNodeB. After receiving the DRB establishing or adding request, the secondary eNodeB allocates a DRB to the user equipment, and then the counter generates a counter value for the DRB. Each counter value generated by the counter is unique, and therefore the counter value may be used as a key parameter corresponding to the DRB.

After allocating the key parameter, the secondary eNodeB may directly send the key parameter to the user equipment; or first send the key parameter to the master eNodeB, and the master eNodeB forwards the key parameter to the user equipment.

Optionally, if the key parameter is allocated by the master eNodeB, the key parameter includes only a DRB ID.

Specifically, after the user equipment establishes an RRC connection to the master eNodeB, the master eNodeB allocates a DRB to the user equipment. A DRB ID of each DRB is unique, and therefore the DRB ID may be used as a key parameter corresponding to the DRB.

After allocating the key parameter, the master eNodeB may directly send the key parameter to the user equipment; or first send the key parameter to the secondary eNodeB, and the secondary eNodeB forwards the key parameter to the user equipment.

The generating unit 1020 is configured to generate a user plane key according to the key parameter and a basic key.

After the receiving unit 1010 receives the key parameter, the generating unit 1020 performs, by using a key derivation function KDF, calculation on the key parameter and a basic key (for example, a secondary eNodeB key S-KeNB) generated by the user equipment, so as to generate a user plane key.

Correspondingly, a user plane key of the secondary eNodeB is generated by the secondary eNodeB or the master eNodeB. The secondary eNodeB or the master eNodeB generates the user plane key according to the key parameter and a basic key generated by the master eNodeB.

The basic key generated by the user equipment and the basic key generated by the master eNodeB are the same.

Specifically, the user equipment and the master eNodeB separately perform calculation on a same shared key (for example, a base station key KeNB) and a same shared key parameter by using the key derivation function KDF, so as to generate a basic key. Therefore, the basic key generated by the user equipment and the basic key generated by the master eNodeB are the same.

In addition, the secondary eNodeB or the master eNodeB generates, in a same manner in which the user equipment generates a user plane key, the user plane key according to the key parameter and the basic key generated by the master eNodeB. Because the basic key generated by the user equipment and the basic key generated by the secondary eNodeB or the master eNodeB are the same, and a same user plane key generation manner is used, the user plane key generated by the user equipment and the user plane key generated by the secondary eNodeB or the master eNodeB are the same.

Optionally, the user plane key generated in this embodiment may be specifically a user plane cipher key. Before sending user plane data, the user equipment or the secondary eNodeB encrypts, according to the generated user plane cipher key, the user plane data to form a ciphertext, so that the data cannot be cracked in a sending process. Correspondingly, after receiving the user plane data, the user equipment or the secondary eNodeB decrypts the user plane data according to the generated user plane cipher key to obtain original user plane data.

Optionally, the user plane key generated in this embodiment may be specifically a user plane integrity protection key. Before sending user plane data, the user equipment or the secondary eNodeB performs integrity protection on the user plane data according to the generated user plane integrity protection key, so that the data cannot be tampered in a sending process. Correspondingly, after receiving the user plane data, the user equipment or the secondary eNodeB checks integrity of the user plane data according to the generated user plane integrity protection key, so as to ensure that the user plane data is not tampered.

According to the used user equipment provided in Embodiment 10 of the present invention, a user plane key between the user equipment and a secondary eNodeB is separately generated by the user equipment and the secondary eNodeB, or separately generated by the user equipment and a master eNodeB, so that load of the master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

In hardware implementation, the foregoing receiving unit 1010 may be a receiver or a transceiver, and the foregoing generating unit 1020 may be built in or independent of a processor of the user equipment in a hardware form, or may be stored in a memory of the user equipment in a software form, so that the processor invokes and executes an operation corresponding to each of the foregoing modules. The processor may be a central processing unit (CPU), a microprocessor, a single-chip microcomputer, or the like.

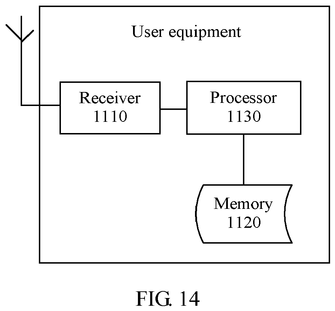

As shown in FIG. 14, FIG. 14 is a schematic structural diagram of user equipment according to Embodiment 11 of the present invention. The user equipment includes a receiver 1110, a memory 1120, and a processor 1130 separately connected to the receiver 1110 and the memory 1120. Certainly, the user equipment may further include general components, such as an antenna, a baseband processing component, an intermediate radio frequency processing component, and an input and output apparatus. This embodiment of the present invention sets no limitation thereto. The user equipment may be user equipment described in Embodiment 1, Embodiment 2, or Embodiment 3.

The memory 1120 stores a set of program code, and the processor 1130 is configured to invoke the program code stored in the memory 1120, so as to execute the following operations:
receiving a key parameter corresponding to a DRB sent by a master eNodeB or a secondary eNodeB; and
generating a user plane key according to the key parameter and a basic key.

Further, the key parameter includes at least one of the following parameters: a DRB ID, a random number, or a counter value.

Further, the user plane key is a user plane cipher key or a user plane integrity protection key.

The master eNodeB is a macro base station. The secondary eNodeB is a small cell, and the small cell is specifically a micro base station or a femto base station.

According to the used user equipment provided in Embodiment 11 of the present invention, a user plane key between the user equipment and a secondary eNodeB is separately generated by the user equipment and the secondary eNodeB, or separately generated by the user equipment and a master eNodeB, so that load of the master eNodeB may be effectively reduced. In addition, because different DRBs of same user equipment correspond to different key parameters, different user plane keys between the same user equipment and the secondary eNodeB are generated for the different DRBs, so that security of the user plane keys between the secondary eNodeB and the user equipment may be effectively improved.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementation manners, the objective, technical solutions, and benefits of the present invention are further described in detail. It should be understood that the foregoing descriptions are merely specific implementation manners of the present invention, but are not intended to limit the protection scope of the present invention.

## Claims

1. A key generation method, wherein the method comprises:
determining (S101), by a secondary eNodeB, a key parameter corresponding to a data radio bearer, DRB;
sending (S102), by the secondary eNodeB, the key parameter to user equipment corresponding to the DRB, whereby the user equipment generates a user plane key according to the key parameter and a basic key generated by the user equipment;
receiving (S103), by the secondary eNodeB, a basic key generated by the master eNodeB and sent by the master eNodeB; and
generating (SI04), by the secondary eNodeB, the user plane key according to the key parameter and the basic key generated by the master eNodeB;
wherein the basic key generated by the user equipment and the basic key generated by the master eNodeB are the same; and
wherein the user plane key generated by the user equipment and the user plane key generated by the secondary eNodeB are the same and are used as a user plane cipher key or a user plane integrity protection key to perform communication between the user equipment and the secondary eNodeB.

2. The method according to claim 1, wherein the determining, by a secondary eNodeB, a key parameter corresponding to a DRB is specifically:
allocating or generating, by the secondary eNodeB, a key parameter for the DRB, wherein the key parameter comprises at least one of the following parameters: a DRB ID, a random number, or a counter value.

3. The method according to claim 1, wherein before the determining, by a secondary eNodeB, a key parameter corresponding to a DRB, the method further comprises:
receiving, by the secondary eNodeB, a DRB establishing or adding request sent by the master eNodeB, wherein the DRB establishing or adding request carries the key parameter; and
the determining, by the secondary eNodeB, a key parameter corresponding to a DRB is specifically:
obtaining, by the secondary eNodeB, the key parameter from the DRB establishing or adding request, wherein the key parameter comprises a DRB ID.

4. The method according to any one of claims 1 to 3, wherein the sending, by the secondary eNodeB, the key parameter to user equipment corresponding to the DRB is specifically:
sending, by the secondary eNodeB, the key parameter to the user equipment by using the master eNodeB.

5. A key generation method, wherein the method comprises:
determining (S201), by a master eNodeB, a key parameter corresponding to a data radio bearer DRB;
sending (S202), by the master eNodeB, the key parameter to user equipment corresponding to the DRB, whereby the user equipment generates a user plane key according to the key parameter and a basic key generated by the user equipment; and
sending (S203), by the master eNodeB, the key parameter and a basic key generated by the master eNodeB to a secondary eNodeB, whereby the secondary eNodeB generates the user plane key according to the key parameter and the basic key generated by the master eNodeB;
wherein the basic key generated by the user equipment and the basic key generated by the master eNodeB are the same;
wherein the user plane key generated by the user equipment and the user plane key generated by the secondary eNodeB are the same and are used as a user plane cipher key or a user plane integrity protection key to perform communication between the user equipment and the secondary eNodeB.

6. The method according to claim 5, wherein the key parameter comprises a DRB ID.

7. The method according to claims 5 or 6, wherein the user plane key is a user plane cipher key or a user plane integrity protection key.

8. A secondary eNodeB, wherein the secondary eNodeB comprises:
a determining unit (410), configured to determine a key parameter corresponding to a data radio bearer DRB;
a sending unit (420), configured to send the key parameter to user equipment corresponding to the DRB, whereby the user equipment generates a user plane key according to the key parameter and a basic key generated by the user equipment;
a receiving unit (430), configured to receive a basic key generated by a master eNodeB and sent by the master eNodeB; and
a generating unit (440), configured to generate the user plane key according to the key parameter and the basic key generated by the master eNodeB;
wherein the basic key generated by the user equipment and the basic key generated by the master eNodeB are the same;
wherein the user plane key generated by the user equipment and the user plane key generated by the secondary eNodeB are the same and are used as a user plane cipher key or a user plane integrity protection key to perform communication between the user equipment and the secondary eNodeB.

9. The secondary eNodeB according to claim 8, wherein the determining unit is specifically configured to:
allocate or generate a key parameter to the DRB, wherein the key parameter comprises at least one of the following parameters: a DRB ID, a random number, or a counter value.

10. The secondary eNodeB according to claim 8, wherein the receiving unit is further configured to receive a DRB establishing or adding request sent by the master eNodeB, wherein the DRB establishing or adding request carries the key parameter; and
the determining unit is specifically configured to:
obtain the key parameter from the DRB establishing or adding request, wherein the key parameter comprises a DRB ID.

11. The secondary eNodeB according to any one of claims 8 to 10, wherein the sending unit is specifically configured to:
send the key parameter to the user equipment by using the master eNodeB.

12. A master eNodeB, wherein the master eNodeB comprises:
a determining unit (610), configured to determine a key parameter corresponding to a data radio bearer DRB; and
a sending unit (610), configured to send the key parameter to user equipment corresponding to the DRB, whereby the user equipment generates a user plane key according to the key parameter and a basic key generated by the user equipment; wherein
the sending unit (610) is further configured to send the key parameter and a basic key generated by the master eNodeB to a secondary eNodeB, whereby the secondary eNodeB generates the user plane key according to the key parameter and the basic key generated by the master eNodeB;
wherein the basic key generated by the user equipment and the basic key generated by the master eNodeB are the same;
wherein the user plane key generated by the user equipment and the user plane key generated by the secondary eNodeB are the same and are used as a user plane cipher key or a user plane integrity protection key to perform communication between the user equipment and the secondary eNodeB.

13. The master eNodeB according to claim 12, wherein the key parameter comprises a DRB ID.

14. The master eNodeB according to claim 12 or 13, wherein the user plane key is a user plane cipher key or a user plane integrity protection key.

## Patentansprüche

1. Schlüsselerzeugungsverfahren, wobei das Verfahren umfasst:
Ermitteln (S101), durch einen sekundären eNodeB, eines Schlüsselparameters, der einem Datenfunkträger (Data Radio Bearer) DRB entspricht;
Senden (S102) des Schlüsselparameters von dem sekundären eNodeB zu einem Benutzergerät, das dem DRB entspricht, wodurch das Benutzergerät gemäß dem Schlüsselparameter und gemäß einem von dem Benutzergerät erzeugten Basisschlüssel einen Benutzerebenenschlüssel erzeugt;
Empfangen (S103), in dem sekundären eNodeB, eines Basisschlüssels, der von dem Master-eNodeB erzeugt wird und von dem Master-eNodeB gesendet wird; und
Erzeugen (S104) des Benutzerebenenschlüssels durch den sekundären eNodeB gemäß dem Schlüsselparameter und gemäß dem von dem Master-eNodeB erzeugten Basisschlüssel;
wobei der von dem Benutzergerät erzeugte Basisschlüssel und der von dem Master-eNodeB erzeugte Basisschlüssel gleich sind; und
wobei der von dem Benutzergerät erzeugte Benutzerebenenschlüssel und der von dem sekundären eNodeB erzeugte Benutzerebenenschlüssel gleich sind und als ein Benutzerebenenchiffrierschlüssel oder als ein Integritätsschutzschlüssel für die Benutzerebene verwendet werden, um eine Kommunikation zwischen dem Benutzergerät und dem sekundären eNodeB auszuführen.

2. Verfahren nach Anspruch 1, wobei das Ermitteln, durch einen sekundären eNodeB, eines Schlüsselparameters, der einem DRB entspricht, insbesondere umfasst:
Zuteilen oder Erzeugen, durch den sekundären eNodeB, eines Schlüsselparameters für den DRB, wobei der Schlüsselparameter mindestens einen der folgenden Parameter umfasst: eine DRB-Kennung, eine Zufallszahl oder einen Zählerwert.

3. Verfahren nach Anspruch 1, wobei das Verfahren vor dem Ermitteln, durch einen sekundären eNodeB, eines Schlüsselparameters, der einem DRB entspricht, außerdem umfasst:
Empfangen, in dem sekundären eNodeB, einer Anfrage zum Einrichten oder Hinzufügen eines DRB, die von dem Master-eNodeB gesendet wird, wobei die Anfrage zum Einrichten oder Hinzufügen eines DRB den Schlüsselparameter mitführt; und
wobei das Ermitteln, durch den sekundären eNodeB, eines Schlüsselparameters, der einem DRB entspricht; insbesondere umfasst:
Erhalten, in dem sekundären eNodeB, des Schlüsselparameters aus der Anfrage zum Einrichten oder Hinzufügen eines DRB, wobei der Schlüsselparameter eine DRB-Kennung umfasst.

4. Verfahren nach einem der Ansprüche 1 bis 3, wobei das Senden des Schlüsselparameters von dem sekundären eNodeB zu einem Benutzergerät, das dem DRB entspricht, insbesondere umfasst:
Senden des Schlüsselparameters von dem sekundären eNodeB zu dem Benutzergerät, indem der Master-eNodeB verwendet wird.

5. Schlüsselerzeugungsverfahren, wobei das Verfahren umfasst:
Ermitteln (S201), durch einen Master-eNodeB, eines Schlüsselparameters, der einem Datenfunkträger (Data Radio Bearer) DRB entspricht;
Senden (S202) des Schlüsselparameters von dem Master-eNodeB zu einem Benutzergerät, das dem DRB entspricht, wodurch das Benutzergerät gemäß dem Schlüsselparameter und gemäß einem von dem Benutzergerät erzeugten Basisschlüssel einen Benutzerebenenschlüssel erzeugt; und
Senden (S203) des Schlüsselparameters und eines von dem Master-eNodeB erzeugten Basisschlüssels von dem Master-eNodeB zu einem sekundären eNodeB, wodurch der sekundäre eNodeB gemäß dem Schlüsselparameter und gemäß dem von dem Master-eNodeB erzeugten Basisschlüssel den Benutzerebenenschlüssel erzeugt;
wobei der von dem Benutzergerät erzeugte Basisschlüssel und der von dem Master-eNodeB erzeugte Basisschlüssel gleich sind;
wobei der von dem Benutzergerät erzeugte Benutzerebenenschlüssel und der von dem sekundären eNodeB erzeugte Benutzerebenenschlüssel gleich sind und als ein Benutzerebenenchiffrierschlüssel oder als ein Integritätsschutzschlüssel für die Benutzerebene verwendet werden, um eine Kommunikation zwischen dem Benutzergerät und dem sekundären eNodeB auszuführen.

6. Verfahren nach Anspruch 5, wobei der Schlüsselparameter eine DRB-Kennung umfasst.

7. Verfahren nach Anspruch 5 oder 6, wobei der Benutzerebenenschlüssel ein Benutzerebenenchiffrierschlüssel oder ein Integritätsschutzschlüssel für die Benutzerebene ist.

8. Sekundärer eNodeB, wobei der sekundäre eNodeB umfasst:
eine Ermittlungseinheit (410), die konfiguriert ist zum: Ermitteln eines Schlüsselparameters, der einem Datenfunkträger (Data Radio Bearer) DRB entspricht;
eine Sendeeinheit (420), die konfiguriert ist zum Senden des Schlüsselparameters zu einem Benutzergerät, das dem DRB entspricht, wodurch das Benutzergerät gemäß dem Schlüsselparameter und gemäß einem von dem Benutzergerät erzeugten Basisschlüssel einen Benutzerebenenschlüssel erzeugt;
eine Empfangseinheit (430), die konfiguriert ist zum Empfangen eines Basisschlüssels, der von einem Master-eNodeB erzeugt wird und von dem Master-eNodeB gesendet wird; und
eine Erzeugungseinheit (440), die konfiguriert ist zum Erzeugen des Benutzerebenenschlüssels gemäß dem Schlüsselparameter und gemäß dem von dem Master-eNodeB erzeugten Basisschlüssel;
wobei der von dem Benutzergerät erzeugte Basisschlüssel und der von dem Master-eNodeB erzeugte Basisschlüssel gleich sind;
wobei der von dem Benutzergerät erzeugte Benutzerebenenschlüssel und der von dem sekundären eNodeB erzeugte Benutzerebenenschlüssel gleich sind und als ein Benutzerebenenchiffrierschlüssel oder als ein Integritätsschutzschlüssel für die Benutzerebene verwendet werden, um eine Kommunikation zwischen dem Benutzergerät und dem sekundären eNodeB auszuführen.

9. Sekundärer eNodeB nach Anspruch 8, wobei die Ermittlungseinheit insbesondere konfiguriert ist zum:
Zuteilen oder Erzeugen eines Schlüsselparameters für den DRB, wobei der Schlüsselparameter mindestens einen der folgenden Parameter umfasst: eine DRB-Kennung, eine Zufallszahl oder einen Zählerwert.

10. Sekundärer eNodeB nach Anspruch 8, wobei die Empfangseinheit außerdem konfiguriert ist zum Empfangen einer Anfrage zum Einrichten oder Hinzufügen eines DRB, die von dem Master-eNodeB gesendet wird, wobei die Anfrage zum Einrichten oder Hinzufügen eines DRB den Schlüsselparameter mitführt; und
wobei die Ermittlungseinheit insbesondere konfiguriert ist zum:
Erhalten des Schlüsselparameters aus der Anfrage zum Einrichten oder Hinzufügen eines DRB, wobei der Schlüsselparameter eine DRB-Kennung umfasst.

11. Sekundärer eNodeB nach einem der Ansprüche 8 bis 10, wobei die Sendeeinheit insbesondere konfiguriert ist zum:
Senden des Schlüsselparameters zu dem Benutzergerät, indem der Master-eNodeB verwendet wird.

12. Master-eNodeB, wobei der Master-eNodeB umfasst:
eine Ermittlungseinheit (610), die konfiguriert ist zum Ermitteln eines Schlüsselparameters, der einem Datenfunkträger (Data Radio Bearer) DRB entspricht; und
eine Sendeeinheit (610), die konfiguriert ist zum Senden des Schlüsselparameters zu einem Benutzergerät, das dem DRB entspricht, wodurch das Benutzergerät gemäß dem Schlüsselparameter und gemäß einem von dem Benutzergerät erzeugten Basisschlüssel einen Benutzerebenenschlüssel erzeugt;
wobei die Sendeeinheit (610) außerdem konfiguriert ist zum Senden des Schlüsselparameters und eines von dem Master-eNodeB erzeugten Basisschlüssels zu einem sekundären eNodeB, wodurch der sekundäre eNodeB gemäß dem Schlüsselparameter und gemäß dem von dem Master-eNodeB erzeugten Basisschlüssel den Benutzerebenenschlüssel erzeugt;
wobei der von dem Benutzergerät erzeugte Basisschlüssel und der von dem Master-eNodeB erzeugte Basisschlüssel gleich sind;
wobei der von dem Benutzergerät erzeugte Benutzerebenenschlüssel und der von dem sekundären eNodeB erzeugte Benutzerebenenschlüssel gleich sind und als ein Benutzerebenenchiffrierschlüssel oder als ein Integritätsschutzschlüssel für die Benutzerebene verwendet werden, um eine Kommunikation zwischen dem Benutzergerät und dem sekundären eNodeB auszuführen.

13. Master-eNodeB nach Anspruch 12, wobei der Schlüsselparameter eine DRB-Kennung umfasst.

14. Master-eNodeB nach Anspruch 12 oder 13, wobei der Benutzerebenenschlüssel ein Benutzerebenenchiffrierschlüssel oder ein Integritätsschutzschlüssel für die Benutzerebene ist.

## Revendications

1. Procédé de génération de clé, le procédé comprenant :
la détermination (S101), par un eNodeB secondaire, d'un paramètre de clé correspondant à un support radio de données, DRB ;
l'envoi (S102), par l'eNodeB secondaire, du paramètre de clé à un équipement utilisateur correspondant au DRB, de sorte que l'équipement utilisateur génère une clé de plan utilisateur selon le paramètre de clé et une clé de base générée par l'équipement utilisateur ;
la réception (S103), par l'eNodeB secondaire, d'une clé de base générée par l'eNodeB maître et envoyée par l'eNodeB maître ; et
la génération (S104), par l'eNodeB secondaire, de la clé de plan utilisateur selon le paramètre de clé et la clé de base générée par l'eNodeB maître ;
dans lequel la clé de base générée par l'équipement utilisateur et la clé de base générée par l'eNodeB maître sont identiques ; et
dans lequel la clé de plan utilisateur générée par l'équipement utilisateur et la clé de plan utilisateur générée par l'eNodeB secondaire sont identiques et sont utilisées comme une clé de chiffrement de plan utilisateur ou une clé de protection d'intégrité de plan utilisateur pour effectuer une communication entre l'équipement utilisateur et l'eNodeB secondaire.

2. Procédé selon la revendication 1, dans lequel la détermination, par un eNodeB secondaire, d'un paramètre de clé correspondant à un DRB consiste spécifiquement à :
allouer ou générer, par l'eNodeB secondaire, un paramètre de clé pour le DRB, le paramètre de clé comprenant au moins l'un des paramètres suivants : une ID de DRB, un nombre aléatoire ou une valeur de compteur.

3. Procédé selon la revendication 1, le procédé comprenant en outre, avant la détermination, par un eNodeB secondaire, d'un paramètre de clé correspondant à un DRB :
la réception, par l'eNodeB secondaire, d'une demande d'établissement ou d'ajout d'un DRB envoyée par l'eNodeB maître, la demande d'établissement ou d'ajout d'un DRB portant le paramètre de clé ; et
la détermination, par l'eNodeB secondaire, d'un paramètre de clé correspondant à un DRB consistant spécifiquement à :
obtenir, par l'eNodeB secondaire, le paramètre de clé à partir de la demande d'établissement ou d'ajout d'un DRB, le paramètre de clé comprenant une ID de DRB.

4. Procédé selon l'une quelconque des revendications 1 à 3, dans lequel l'envoi, par l'eNodeB secondaire, du paramètre de clé à l'équipement utilisateur correspondant au DRB consiste spécifiquement à :
envoyer, par l'eNodeB secondaire, le paramètre de clé à l'équipement utilisateur en utilisant l'eNodeB maître.

5. Procédé de génération de clé, le procédé comprenant :
la détermination (S201), par un eNodeB maître, d'un paramètre de clé correspondant à un support radio de données DRB ;
l'envoi (S202), par l'eNodeB maître, du paramètre de clé à l'équipement utilisateur correspondant au DRB, de sorte que l'équipement utilisateur génère une clé de plan utilisateur selon le paramètre de clé et une clé de base générée par l'équipement utilisateur ; et
l'envoi (S203), par l'eNodeB maître, du paramètre de clé et d'une clé de base générée par l'eNodeB maître à un eNodeB secondaire, de sorte que l'eNodeB secondaire génère la clé de plan utilisateur selon le paramètre de clé et la clé de base générée par l'eNodeB maître ;
dans lequel la clé de base générée par l'équipement utilisateur et la clé de base générée par l'eNodeB maître sont identiques ;
dans lequel la clé de plan utilisateur générée par l'équipement utilisateur et la clé de plan utilisateur générée par l'eNodeB secondaire sont identiques et sont utilisées comme une clé de chiffrement de plan utilisateur ou une clé de protection d'intégrité de plan utilisateur pour effectuer une communication entre l'équipement utilisateur et l'eNodeB secondaire.

6. Procédé selon la revendication 5, dans lequel le paramètre de clé comprend une ID de DRB.

7. Procédé selon la revendication 5 ou 6, dans lequel la clé de plan utilisateur est une clé de chiffrement de plan utilisateur ou une clé de protection d'intégrité de plan utilisateur.

8. ENodeB secondaire, l'eNodeB secondaire comprenant :
une unité de détermination (410), configurée pour déterminer un paramètre de clé correspondant à un support radio de données DRB ;
une unité d'envoi (420), configurée pour envoyer le paramètre de clé à l'équipement utilisateur correspondant au DRB, de sorte que l'équipement utilisateur génère une clé de plan utilisateur selon le paramètre de clé et une clé de base générée par l'équipement utilisateur ;
une unité de réception (430), configurée pour recevoir une clé de base générée par un eNodeB maître et envoyée par l'eNodeB maître ; et
une unité de génération (440), configurée pour générer la clé de plan utilisateur selon le paramètre de clé et la clé de base générée par l'eNodeB maître ;
dans lequel la clé de base générée par l'équipement utilisateur et la clé de base générée par l'eNodeB maître sont identiques ;
dans lequel la clé de plan utilisateur générée par l'équipement utilisateur et la clé de plan utilisateur générée par l'eNodeB secondaire sont identiques et sont utilisées comme une clé de chiffrement de plan utilisateur ou une clé de protection d'intégrité de plan utilisateur pour effectuer une communication entre l'équipement utilisateur et l'eNodeB secondaire.

9. ENodeB secondaire selon la revendication 8, dans lequel l'unité de détermination est spécifiquement configurée pour :
allouer ou générer un paramètre de clé pour le DRB, le paramètre de clé comprenant au moins l'un des paramètres suivants : une ID de DRB, un nombre aléatoire ou une valeur de compteur.

10. ENodeB secondaire selon la revendication 8, dans lequel l'unité de réception est en outre configurée pour recevoir une demande d'établissement ou d'ajout de DRB envoyée par l'eNodeB maître, la demande d'établissement ou d'ajout de DRB portant le paramètre de clé ; et
l'unité de détermination est spécifiquement configurée pour :
obtenir le paramètre de clé de la demande d'établissement ou d'ajout de DRB, le paramètre de clé comprenant une ID de DRB.

11. ENodeB secondaire selon l'une quelconque des revendications 8 à 10, dans lequel l'unité d'envoi est spécifiquement configurée pour :
envoyer le paramètre de clé à l'équipement utilisateur en utilisant l'eNodeB maître.

12. ENodeB maître, l'eNodeB maître comprenant :
une unité de détermination (610), configurée pour déterminer un paramètre de clé correspondant à un support radio de données DRB ; et
une unité d'envoi (610), configurée pour envoyer le paramètre de clé à l'équipement utilisateur correspondant au DRB, de sorte que l'équipement utilisateur génère une clé de plan utilisateur selon le paramètre de clé et une clé de base générée par l'équipement utilisateur ; dans lequel
l'unité d'envoi (610) est en outre configurée pour envoyer le paramètre de clé et une clé de base générée par l'eNodeB maître à un eNodeB secondaire, de sorte que l'eNodeB secondaire génère la clé de plan utilisateur selon le paramètre de clé et la clé de base générée par l'eNodeB maître ;
dans lequel la clé de base générée par l'équipement utilisateur et la clé de base générée par l'eNodeB maître sont identiques ;
dans lequel la clé de plan utilisateur générée par l'équipement utilisateur et la clé de plan utilisateur générée par l'eNodeB secondaire sont identiques et sont utilisées comme une clé de chiffrement de plan utilisateur ou une clé de protection d'intégrité de plan utilisateur pour effectuer une communication entre l'équipement utilisateur et l'eNodeB secondaire.

13. ENodeB maître selon la revendication 12, dans lequel le paramètre de clé comprend une ID de DRB.

14. ENodeB maître selon la revendication 12 ou 13, dans lequel la clé de plan utilisateur est une clé de chiffrement de plan utilisateur ou une clé de protection d'intégrité de plan utilisateur.
